# EUROPÄISCHE PATENTSCHRIFT

(11) **EP 3 619 795 B1**
(45) Veröffentlichungstag und Bekanntmachung des Hinweises auf die Patenterteilung: **24.02.2021**
(21) Anmeldenummer: 18718680.4
(22) Anmeldetag: 05.04.2018
(51) Int. Cl.: H02K 1/06, H02K 1/32, H02K 9/19

(54) **ELEKTRISCHE MASCHINE MIT KÜHLUNG**
ELECTRICAL MACHINE WITH COOLING
MACHINE ÉLECTRIQUE AVEC DISPOSITIF DE REFROIDISSEMENT

(30) Priorität: 03.05.2017 DE 102017109486
(43) Veröffentlichungstag der Anmeldung: 11.03.2020
(73) Patentinhaber: Schaeffler Technologies AG & Co. KG, 91074 Herzogenaurach (DE)
(72) Erfinder: SCHWANEMANN, Peter, 77815 Bühl (DE); GRAMANN, Matthias, 77871 Renchen (DE); ANGRICK, Carsten, 77767 Appenweier (DE); REIK, Wolfgang, 77815 Bühl (DE)
(86) Internationale Anmeldenummer: PCT/DE2018/100304
(87) Internationale Veröffentlichungsnummer: WO 2018/202235

(56) Entgegenhaltungen:
- WO-A1-2016/034570
- DE-A1- 3 716 771
- DE-A1-102015 100 090
- JP-A- 2010 148 230
- JP-A- 2011 217 434

## Beschreibung

Die vorliegende Erfindung betrifft eine elektrische Maschine mit Kühlung gemäß dem Oberbegriff des Anspruchs 1. Die elektrische Maschine ist dabei von einem Gehäuse umgeben, in dem ein Stator sitzt, der eine Vielzahl von sich in radialer Richtung auf den Rotor hin erstreckenden Statorzähnen aufweist.

In der deutschen Offenlegungsschrift DE 10 2012 217 711 A1 wird eine elektrische Maschine mit Kühlung offenbart. Die elektrische Maschine umfasst einen Stator, wobei die elektrischen Wicklungen des Statorrings mit einer Vergussmasse umgeben sind. Zur Kühlung sind in der Vergussmasse Kanäle vorgesehen, die nahe an den elektrischen Wicklungen ausgebildet sind.

Die deutsche Offenlegungsschrift DE 10 2015 100 090 A1 offenbart eine Kühlung von Statorspulen einer elektrischen Maschine. Zur Kühlung ist eine Kühlmittelzufuhr bereitgestellt, die Hohlräume zwischen Gruppen von Windungen ausfüllt. Die Kühlmittelzufuhr weist eine Mehrzahl von Fingern auf, wobei die Finger zwischen benachbarten Paaren von Spulen angeordnet sind. Die Kühlmittelzufuhr weist interne Passagen auf, um ein unter Druck stehendes Kühlmittel aufzunehmen, und Auslassöffnungen, um Kühlmittel auf die Spulen zu spritzen. In anderen Ausführungsformen transportieren die Finger das Kühlmittel bis zu allen Spulen mit Hilfe der Schwerkraft.

Ferner sind aus dem Stand der Technik verschiedene Methoden zur Kühlung (Entwärmung) drehender elektrischer Maschinen bekannt. Die marktüblichste Methode ist die indirekte Kühlung des Stators, wobei die Wärme über das Gehäuse bzw. über das Bauelement, das den Stator mechanisch mit dem Gehäuse verbindet, abgeführt wird. Die Wärme wird von dort üblicherweise passiv über Kühlrücken oder über Gas- oder Fluid-Konvektion aus der Maschine geführt. Ebenfalls marktüblich ist eine direkte Kühlung der Maschine über ein Ölbad bzw. eine aktive Ölkühlung, die die Wärme direkt von den wärmeerzeugenden Komponenten der elektrischen Maschine abgreift. Nachteil dieser Variante ist die Notwendigkeit einer zusätzlichen Ölpumpe sowie eines Wärmetauschers, um die abgeführte Wärme von Öl oder anderen Medien aus der elektrischen Maschine zu führen (siehe z. B. deutsche Offenlegungsschrift DE 10 2012 020 958 A1).

Bei den aus dem Stand der Technik bekannten Radialflussmaschinenstatoren werden die Wicklungen um die Zähne des Stators gewunden. Das Joch des Stators verbindet die Enden der Statorzähne miteinander, so dass die Außenkontur des Stators in der Regel rund ist. Es existieren auch Statoren mit nicht runden Außenkonturen. Diese werden zumeist jedoch nur aus konstruktiven Gründen, wie der Verankerung mit dem Gehäuse oder ähnlichen, konstruiert.

Eine elektrische Maschine gemäß dem Oberbegriff des Anspruchs 1 ist aus jeder der JP 2011 217434 A und der JP 2010 148230 A bekannt.

Bezüglich weiteren Standes der Technik wird auf die WO2016/034570 A1 verwiesen.

Es ist daher Aufgabe der vorliegenden Erfindung, eine elektrische Maschine zu schaffen, die eine effizientere Kühlung (Entwärmung) aufweist und dabei einen kostengünstigen und funktionalen Aufbau besitzt.

Diese Aufgabe wird erfindungsgemäß durch eine elektrische Maschine gelöst, die die Merkmale des Anspruchs 1 umfasst.

Weitere vorteilhafte Ausgestaltungen der vorliegenden Erfindung sind Gegenstand der abhängigen Ansprüche.

Eine elektrische Maschine ist von einem Gehäuse umgeben, in dem der Stator sitzt, der eine Vielzahl von sich in radialer Richtung auf den Rotor hin erstreckenden Statorzähnen aufweist. Ein die Statorzähne verbindendes Joch ist derart angeordnet, dass mehrere erste Freiräume zwischen dem Gehäuse und dem Joch und mehrere zweite Freiräume zwischen dem Joch und einem freien Ende der Statorzähne ausgebildet sind. Eine Kühlmittelführung ist flächig zumindest an einer axialen Seitenfläche des Jochs in wärmeleitendem Kontakt. Der Stator ist dabei in formschlüssigem und wärmeleitendem Kontakt mit der inneren Seite des Gehäuses. Hierzu sind die Enden der Statorzähne, die den freien Enden der Statorzähne gegenüberliegen, an der Innenseite des Gehäuses verankert (Formschluss).

Vorteilhaft ist eine Kühlmittelführung jeweils auf beiden axialen Seitenflächen des Jochs aufgebracht und mit diesen Seitenflächen ebenfalls in wärmeleitendem Kontakt.

Die Kühlmittelführung selbst ist vorteilhaft als Hohlkörper ausgebildet, der eine flache Begrenzungswand und eine gewölbte Begrenzungswand aufweist. Die flache Begrenzungswand liegt dabei an der axialen Seitenfläche bzw. an den axialen Seitenflächen des Jochs an.

Das Joch ist vorteilhaft derart zwischen dem Gehäuse und den freien Enden der Statorzähne positioniert, dass eine Querschnittsfläche der ersten Freiräume und eine Querschnittsfläche der zweiten Freiräume im Wesentlichen gleich groß sind.

Die Spulen (Wicklungen) des Stators liegen in den beiden Freiräumen, die oberhalb und unterhalb des Jochs sowie zwischen den Statorzähnen ausgebildet sind. Die Spulen können in jede im Stand der Technik bekannte Verteilung über das Joch umgesetzt werden. Insbesondere sind alle möglichen verteilten und konzentrierten Wicklungsarten sowie alle Ausführungsformen, wie z. B. Runddraht-, Flach- und Formdraht-, Stab- und Hairpinwicklung sowie gegossene Wicklungen, möglich. Kostenmäßig besonders vorteilhaft ist die Ausführungsform von konzentrierten Wicklungen, d. h. Wicklungen, die jeweils zwischen den Statorzähnen um das Joch herumgewickelt sind, wobei jeweils eine oder jeweils mehrere Wicklungen (Single-Layer, Double-Layer, Triple-Layer,...) zwischen zwei Statorzähnen liegen können. Werden diese konzentrierten Wicklungen mit einzelnen Statorzähnen kombiniert, können die Wicklungen vorab gefertigt und erst bei der Montage des Stators aus den einzelnen Statorzähnen auf die Joche aufgebracht werden. Die Trennung der Statorzähne kann dabei je nach Art der Wicklungen konstruiert werden. So kann beispielsweise für eine Single-Layer-Wicklung eine Trennung des Jochs einseitig direkt am nächsten Statorzahn von Vorteil sein. Während wiederum bei einer Double-Layer-Wicklung eine Trennung auf halber Länge des Jochs vorteilhafter sein kann.

Wie bereits oben beschrieben, sind bei der elektrischen Maschine die Enden der Statorzähne des Stators, die den freien Enden der Statorzähne gegenüberliegen, vorteilhaft in formschlüssigen und wärmeleitenden Kontakt mit einer Innenseite des Gehäuses der elektrischen Maschine. Über diesen Formschluss zwischen dem Stator (den Statorzähnen) und dem Gehäuse oder einem Kühlkanal greifen die Enden der Statorzähne in entsprechende Aussparungen ein, so dass eine formschlüssige Verzahnung erreicht wird. Vorteilhaft ist die Montage bzw. der wärmeleitende Kontakt des Stators zum Gehäuse bzw. zum Kühlkanal auch ohne eine entsprechende Verzahnung möglich. Die Wärme kann dadurch zusätzlich über eine Außenseite des Gehäuses und/oder mindestens einen Kühlkanal des Gehäuses abgeführt werden.

Der Stator selbst kann vorteilhaft aus laminierten Elektroblechen, gesintertem magnetisch leitfähigem Material (SMC) oder aus einem massiven magnetisch leitfähigen Material aufgebaut sein. Der Stator kann dabei vorteilhaft entweder als Ganzes gefertigt oder durch die Zusammensetzung aus Einzelteilen (einzelnen Statorzähnen) gefertigt werden.

Die Wicklungen der Spulen zwischen den Statorzähnen sind über das Joch und die mindestens eine Kühlmittelführung, die mit der axialen Seitenfläche des Jochs in Kontakt ist, geführt. Die Kühlmittelführung, welche ein- oder beidseitig auf der axialen Seitenfläche des Jochs aufgebracht ist, dient zu einer primären Kühlung (Entwärmung) des Stators. Damit die Wicklungen im optimalen Kontakt mit der Kühlmittelführung sind, hat die Kühlmittelführung vorteilhaft eine einseitig gewölbte Begrenzungswand ausgebildet. Mit der flachen Begrenzungswand ist die Kühlmittelführung vorteilhaft in Kontakt mit der axialen Seitenfläche des Jochs. Diese Konstruktion ist besonders vorteilhaft, da die Kühlmittelführung zwischen dem Joch und den Wickelköpfen der Wicklungen verläuft. Die Wärme kann direkt von den Wickelköpfen abgeführt werden. Die Wärme aus dem Stator wird ebenfalls über das Joch aufgenommen und abgeführt. Darüber hinaus führt vorteilhaft ein Verguss der Wicklungen im Stator zu einer verbesserten Wärmeabfuhr von den Wärmequellen hin zur Wärmesenke (Kühlmittelführung oder Kühlkanal bzw. Innenseite des Gehäuses). Als sekundäre Kühlung (Entwärmung) kann vorteilhaft eine klassische Kühlung am Außenumfang des Stators dienen. Hier sind z. B. Kühlrippen oder ein Kühlkanal, der thermisch gut an den Stator angebunden ist, wie z. B. durch Verguss oder thermischen Kontakt des Stators mit der Innenseite des Gehäuses, vorgesehen. Der Statoraufbau ist auch hier vorteilhaft, da die eine Hälfte der Wicklung im ersten Freiraum dichter am Kühlkanal bzw. an der Innenseite des Gehäuses liegt.

Der Vorteil der gegenwärtigen Erfindung ist, dass die Wicklungen nicht um die Statorzähne des Stators, sondern um das Joch des Stators gewickelt sind. Hinzu kommt, dass die Kühlmittelführung zwischen dem Joch und den Wickelköpfen eingebracht ist, so dass eine gute wärmeleitende Kopplung zwischen dem Stator und den Wickelköpfen erzielt wird. Diese Art der Kühlung (Entwärmung) über die Kühlmittelführung unter den Wickelköpfen ist somit sehr effektiv, da sie die Wärme direkt von der Wicklung abgreift und abführt. Hinzu kommt, dass aufgrund der Anordnung der Wicklungen um das Joch herum die Kühlmittelführung als kostengünstiges, ringförmiges Rohr mit der beschriebenen Formgebung ausgeführt sein kann.

Im Folgenden sollen Ausführungsbeispiele die Erfindung und ihre Vorteile anhand der beigefügten Figuren näher erläutern. Die Größenverhältnisse in den Figuren entsprechen nicht immer den realen Größenverhältnissen, da einige Formen vereinfacht und andere Formen zur besseren Veranschaulichung vergrößert im Verhältnis zu anderen Elementen dargestellt sind. Dabei zeigen:
- **Figur 1**: eine Querschnittsansicht einer elektrischen Maschine gemäß einer möglichen Ausführungsform der gegenwärtigen Erfindung;
- **Figur 2**: eine Ausführungsform des Jochs mit der Kühlmittelführung entlang der in Figur 1 gezeigten Schnittlinie A-A;
- **Figur 3**: eine weitere Ausführungsform des Jochs mit den Kühlmittelführungen gemäß der in Figur 1 gezeigten Schnittlinie A-A;
- **Figur 4**: eine schematische Schnittansicht des Gehäuses, in dem der Stator eingesetzt ist; und
- **Figur 5**: eine perspektivische Teilansicht des in Figur 1 mit B gekennzeichneten Bereichs.

Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Figur erforderlich sind.

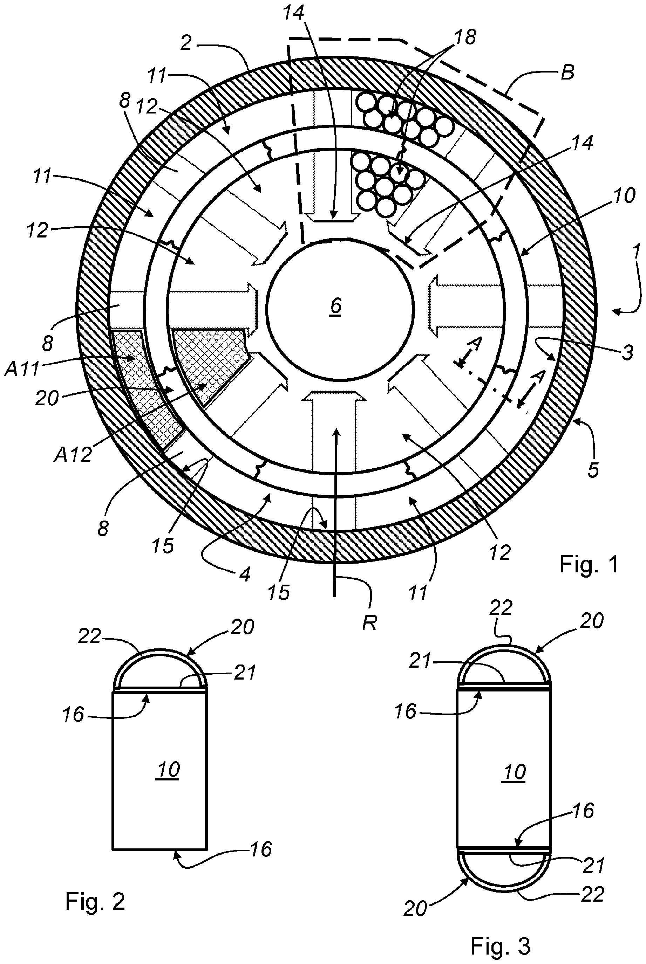

**Figur 1** zeigt eine schematische Schnittansicht durch eine elektrische Maschine 1, gemäß einer möglichen Ausführungsform der Erfindung. Die elektrische Maschine 1 besteht aus einem Gehäuse 2, in dem ein Stator 4 und ein Rotor 6 untergebracht sind. Der Stator 4 ist dabei derart im Gehäuse 2 angeordnet, dass er mit einer Innenseite 3 des Gehäuses 2 in wärmeleitendem Kontakt ist. Der Stator 4 ist aus einer Vielzahl von Statorzähnen 8 aufgebaut, die miteinander über ein Joch 10 verbunden sind. Die Statorzähne 8 sind dabei derart angeordnet, dass deren freien Enden 14 auf einen zentralen Rotor 6 hingerichtet sind. Sämtliche Statorzähne 8 sind dabei in einer radialen Richtung R auf den Rotor 6 hin ausgerichtet. Erfindungsgemäß ist das Joch 10 derart angeordnet, dass das Joch 10 von der Innenseite 3 des Gehäuses 2 beabstandet ist. Durch diese erfindungsgemäße Anordnung des Jochs 10 ergibt sich somit ein erster Freiraum 11, der zwischen der Innenseite 3 des Gehäuses 2 und dem Joch 10 ausgebildet ist. Ebenso resultiert aus der erfindungsgemäßen Anordnung des Jochs 10 ein zweiter Freiraum 12, der zwischen dem Joch 10 und den freien Enden 14 der Statorzähne 8 ausgebildet ist.

In dem ersten Freiraum 11 und dem zweiten Freiraum 12 sind die Wicklungen 18 für die Statorspulen angeordnet. Vorteilhafterweise ist die Anordnung des Jochs 10 in Bezug zu der Innenseite 3 des Gehäuses 2 bzw. zu dem freien Ende 14 der Statorzähne 8 derart gewählt, dass eine Querschnittsfläche A11 des ersten Freiraums 11 und eine Querschnittsfläche A12 des zweiten Freiraums 12 im Wesentlichen die gleiche Fläche aufweisen. Durch diese Art der Anordnung des Jochs 10 kann somit im ersten Freiraum 11 und im zweiten Freiraum 12 die gleiche Anzahl der Wicklungen 18 geführt werden.

**Figur 2** zeigt eine schematische Schnittansicht des Jochs 10 entlang der in Figur 1 gezeigten Schnittlinie A-A. Bei der hier dargestellten Ausführungsform ist eine Kühlmittelführung 20 mit einer axialen Seitenfläche 16 des Jochs 10 in wärmeleitendem Kontakt. Die Kühlmittelführung 20 ist dabei derart ausgebildet, dass sie eine flache Begrenzungswand 21 und eine gewölbte Begrenzungswand 22 besitzt. Es ist für einen Fachmann selbstverständlich, dass die Art der Wölbung der gewölbten Begrenzungswand 22 entsprechend den Anforderungen der Art der Wicklung der Wicklungen 18 um das Joch 10 ausgestaltet werden kann. Die in den Figuren 2 und 3 dargestellten Ausführungsformen der gewölbten Begrenzungswand 22 sollen in keinster Weise als eine Beschränkung der Erfindung aufgefasst werden. Die flache Begrenzungswand 21 liegt dabei an der axialen Seitenfläche 16 des Jochs 10 an. Dadurch ist ein guter Wärmekontakt zwischen dem Joch 10 und dem Kühlmittelkanal 20 gegeben, um für eine effektive Abführung der Wärme aus dem Stator 4 zu sorgen.

**Figur 3** zeigt eine weitere Ausführungsform der Anordnung der Kühlmittelführung 20 am Joch 10 des Stators 4. Bei der hier dargestellten Ausführungsform sind zwei Kühlmittelführungen 20 vorgesehen. Dabei ist auf jeder axialen Seitenfläche 16 des Jochs 10 eine der Kühlmittelführungen 20 angebracht.

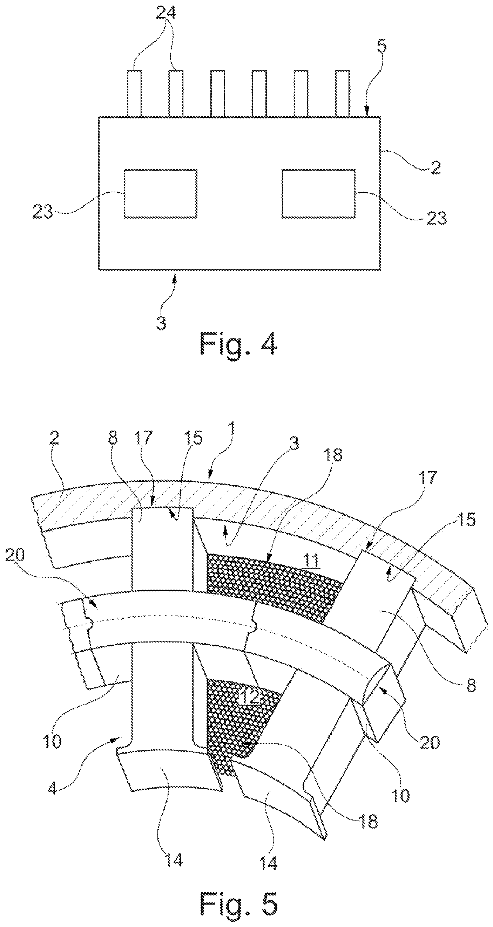

**Figur 4** zeigt eine schematische Querschnittsansicht des Gehäuses 2 der elektrischen Maschine 1. Wie aus der Darstellung der Figur 1 zu erkennen ist, sind die Enden 15 der Statorzähne 8, die den freien Enden 14 der Statorzähne gegenüberliegen, in wärmeleitendem Kontakt mit der Innenseite 3 des Gehäuses 2. Über das Gehäuse 2 kann somit eine sekundäre Kühlung (Entwärmung) ermöglicht werden. Hierzu kann im Gehäuse 2 selbst mindestens ein Kühlkanal 23 ausgebildet sein. Ebenso ist es möglich, dass der Kühlkanal 23 direkt an der Innenseite 3 des Gehäuses 2 vorgesehen ist und somit die Enden 15 der Statorzähne 8 in direktem wärmeleitenden Kontakt mit dem entsprechenden Kühlkanal 23 sind. Zusätzlich zu dem Kühlkanal 23 können auf der Außenseite 5 des Gehäuses 2 mehrere Kühlrippen 24 vorgesehen sein, die somit den Wärmeabtransport vom Gehäuse 2 unterstützen.

**Figur 5** zeigt eine perspektivische Teilansicht der elektrischen Maschine 1 gemäß dem in Figur 1 mit B gekennzeichneten Bereich. Wie bereits in der Beschreibung zu Figur 1 erwähnt, ist das Joch 10 derart angeordnet, dass es von der Innenseite 3 des Gehäuses 2 beabstandet ist. Das Joch 10 ist dabei derart angeordnet, dass zwischen der Innenseite 3 des Gehäuses 2 und dem Joch 10 ein erster Freiraum 11 und zwischen dem Joch 10 und den freien Enden 14 der Statorzähne 8 ein zweiter Freiraum 12 ausgebildet ist. In dem ersten Freiraum 11 und dem zweiten Freiraum 12 sind die Wicklungen 18 für die Spulen vorgesehen.

Bei der hier dargestellten Ausführungsform ist der Stator 4 derart formschlüssig mit dem Gehäuse 2 verbunden, dass die Enden 15 der Statorzähne 8, die den freien Enden 14 gegenüberliegen, in eine entsprechende Aussparung 17 an der Innenseite 3 des Gehäuses 2 eingreifen. Durch diese Verzahnung kann ein fester Sitz des Stators 4 im Gehäuse 2 sichergestellt werden. Es ist für einen Fachmann selbstverständlich, dass auch eine andere Befestigung des Stators 4 im Gehäuse 2 möglich ist. Folglich soll die hier dargestellte Ausführungsform der Befestigung des Stators 4 nicht als eine Beschränkung der Erfindung aufgefasst werden. Auf dem Joch 10 ist der Kühlmittelkanal 20 aufgesetzt und mit diesem in wärmeleitendem Kontakt, wie dies bereits hinlänglich in den Figuren 2 und 3 beschrieben worden ist. Bei der hier dargestellten Ausführungsform ist das Joch 10 mehrteilig ausgebildet und kann zusammen mit den Statorzähnen 8 zu dem fertigen montagefähigen Stator 4 zusammengesetzt werden.

### Bezugszeichenliste

- 1: elektrische Maschine
- 2: Gehäuse
- 3: Innenseite
- 4: Stator
- 5: Außenseite
- 6: Rotor
- 8: Statorzähne
- 10: Joch
- 11: erste Freiräume
- 12: zweite Freiräume
- 14: freies Ende
- 15: Ende
- 16: axiale Seitenfläche
- 17: Aussparung
- 18: Wicklung
- 20: Kühlmittelführung
- 21: flache Begrenzungswand
- 22: gewölbte Begrenzungswand
- 23: Kühlkanal
- 24: Kühlrippen
- A11: Querschnittsfläche
- A12: Querschnittsfläche
- A-A: Schnittlinie
- B: Bereich
- R: radiale Richtung

## Patentansprüche

1. Elektrische Maschine (1) mit Kühlung, wobei die elektrische Maschine (1) aufweist:
einen von einem Gehäuse (2) umgebenen Stator (4), der eine Vielzahl von sich in radialer Richtung (R) auf einen Rotor (6) hin ersteckenden Statorzähnen (8) aufweist,
ein die Statorzähne (8) verbindendes Joch (10), das derart angeordnet ist, dass mehrere erste Freiräume (11) zwischen dem Gehäuse (2) und dem Joch (10) und mehrere zweite Freiräume (12) zwischen dem Joch (10) und einem freien Ende (14) der Statorzähne (8) ausgebildet sind,
eine Kühlmittelführung (20), die flächig mit zumindest einer axialen Seitenfläche (16) des Jochs (10) in wärmeleitenden Kontakt ist, und
eine Vielzahl von Wicklungen (18) für Spulen des Stators (4), die in den ersten Freiräumen (11) und den zweiten Freiräumen (12) zwischen den Statorzähnen (8) vorgesehen sind,
**dadurch gekennzeichnet, dass**
die Vielzahl von Wicklungen (18) zwischen zwei Statorzähnen (8) über das Joch (10) und die mindestens eine Kühlmittelführung (20) geführt ist.

2. Elektrische Maschine (1) nach Anspruch 1, wobei auf beiden axialen Seitenflächen (16) des Jochs (10) jeweils eine Kühlmittelführung (20) mit den jeweiligen Seitenflächen (16) in wärmeleitenden Kontakt ist.

3. Elektrische Maschine (1) nach einem der vorangehenden Ansprüche, wobei
die Kühlmittelführung (20) als Hohlkörper mit einer flachen Begrenzungswand (21) und einer gewölbten Begrenzungswand (22) ausgebildet ist, und
die flache Begrenzungswand (21) an der axialen Seitenfläche (16) des Jochs (10) anliegt.

4. Elektrische Maschine (1) nach einem der vorangehenden Ansprüche, wobei das Joch (10) derart zwischen dem Gehäuse (2) und den freien Enden (14) der Statorzähne (8) positioniert ist, dass eine Querschnittsfläche (A11) der ersten Freiräume (11) und eine Querschnittsfläche (A12) der zweiten Freiräume (12) im Wesentlichen gleich groß ist.

5. Elektrische Maschine (1) nach einem der vorangehenden Ansprüche, wobei Enden (15) der Statorzähne (8) des Stators (4), die den freien Enden (14) der Statorzähne (8) gegenüberliegen, in formschlüssigen und wärmeleitenden Kontakt mit einer Innenseite (3) des Gehäuses (2) sind, so dass über eine Außenseite (5) des Gehäuses (2) oder mindestens einen Kühlkanal (23) des Gehäuses (2) Wärme abführbar ist.

6. Elektrische Maschine (1) nach einem der vorangehenden Ansprüche, wobei der Stator (4) aus laminierten Elektroblechen, aus einem gesinterten, magnetisch leifähigen Material oder aus einem massiven leitfähigen Material aufgebaut ist.

7. Elektrische Maschine (1) nach Anspruch 6, wobei der Stator (4) als Ganzes oder aus Teilen gefertigt ist.

## Claims

1. An electrical machine (1) with cooling, wherein the electrical machine (1) has:
a stator (4) which is surrounded by a housing (2) and which has a plurality of stator teeth (8) extending in the radial direction (R) towards a rotor (6),
a yoke (10) which connects the stator teeth (8) and which is arranged in such a way that a plurality of first free spaces (11) is formed between the housing (2) and the yoke (10) and a plurality of second free spaces (12) is formed between the yoke (10) and a free end (14) of the stator teeth (8),
a coolant duct (20) which is in planar thermally conductive contact with at least one axial lateral surface (16) of the yoke (10), and
a plurality of windings (18) for coils of the stator (4), which are provided in the first free spaces (11) and the second free spaces (12) between the stator teeth (8),
**characterised in that**
the plurality of windings (18) is guided between two stator teeth (8) over the yoke (10) and the at least one coolant duct (20).

2. The electrical machine (1) according to claim 1, wherein, on both axial lateral surfaces (16) of the yoke (10), a coolant duct (20) is in thermally conductive contact with the lateral surfaces (16) in each case.

3. The electrical machine (1) according to any one of the preceding claims, wherein
the coolant duct (20) is designed as a hollow body with a planar boundary wall (21) and a curved boundary wall (22), and
the planar boundary wall (21) rests against the axial lateral surface (16) of the yoke (10).

4. The electrical machine (1) according to any one of the preceding claims, wherein the yoke (10) is positioned between the housing (2) and the free ends (14) of the stator teeth (8) in such a way that a cross-sectional area (A11) of the first free spaces (11) and a cross-sectional area (A12) of the second free spaces (12) is substantially the same size.

5. The electrical machine (1) according to any one of the preceding claims, wherein ends (15) of the stator teeth (8) of the stator (4), which lie opposite the free ends (14) of the stator teeth (8), are in interlocking and thermally conductive contact with an inner side (3) of the housing (2) such that heat can be dissipated via an outer side (5) of the housing (2) or at least one cooling channel (23) of the housing (2).

6. The electrical machine (1) according to any one of the preceding claims, wherein the stator (4) is constructed from laminated electrical steel sheets, from a sintered, magnetically conductive material or from a solid conductive material.

7. The electrical machine (1) according to claim 6, wherein the stator (4) is manufactured as a whole or from parts.

## Revendications

1. Machine électrique (1) avec dispositif de refroidissement, la machine électrique (1) comportant :
un stator (4) qui est entouré d'un carter (2) et possède une pluralité de dents de stator (8) s'étendant dans la direction radiale (R) vers un rotor (6),
une culasse (10) qui relie les dents de stator (8) et est disposée de telle sorte que plusieurs premiers espaces libres (11) sont ménagés entre le carter (2) et la culasse (10) et plusieurs seconds espaces libres (12) sont ménagés entre la culasse (10) et une extrémité libre (14) des dents de stator (8),
un dispositif de guidage d'agent de refroidissement (20) qui est en contact surfacique thermiquement conducteur avec au moins une surface latérale axiale (16) de la culasse (10), et
plusieurs enroulements (18) pour les bobines du stator (4), lesquels sont prévus dans les premiers espaces libres (11) et les seconds espaces libres (12) entre les dents du stator (8),
**caractérisée en ce que**
plusieurs enroulements (18) sont guidés entre deux dents de stator (8) sur la culasse (10) et sur au moins un dispositif de guidage d'agent de refroidissement (20).

2. Machine électrique (1) selon la revendication 1, dans laquelle, sur les deux surfaces latérales axiales (16) de la culasse (10), un dispositif de guidage d'agent de refroidissement (20) est respectivement en contact thermiquement conducteur avec les surfaces latérales (16) respectives.

3. Machine électrique (1) selon l'une quelconque des revendications précédentes, dans laquelle
le dispositif de guidage d'agent de refroidissement (20) est conçu comme un corps creux avec une paroi de délimitation plate (21) et une paroi de délimitation courbe (22), et
la paroi de délimitation plate (21) repose contre la surface latérale axiale (16) de la culasse (10).

4. Machine électrique (1) selon l'une quelconque des revendications précédentes, dans laquelle la culasse (10) est positionnée entre le carter (2) et les extrémités libres (14) des dents de stator (8) de telle sorte qu'une surface en section transversale (A11) des premiers espaces libres (11) et une surface en section transversale (A12) des seconds espaces libres (12) sont essentiellement de la même taille.

5. Machine électrique (1) selon l'une quelconque des revendications précédentes, dans laquelle les extrémités (15) des dents de stator (8) du stator (4), opposées aux extrémités libres (14) des dents de stator (8), sont en contact par complémentarité de forme et de manière thermiquement conductrice avec un côté intérieur (3) du carter (2), de sorte que la chaleur peut être dissipée par le biais d'un côté extérieur (5) du carter (2) ou au moins un canal de refroidissement (23) du carter (2).

6. Machine électrique (1) selon l'une quelconque des revendications précédentes, dans laquelle le stator (4) est construit à partir de tôles d'acier électrique stratifiées, à partir d'un matériau fritté, magnétiquement conducteur ou à partir d'un matériau conducteur solide.

7. Machine électrique (1) selon la revendication 6, dans laquelle le stator (4) est fabriqué comme un tout ou à partir de pièces.
